# EUROPEAN PATENT APPLICATION

(11) **EP 3 012 488 A1**
(43) Date of publication of application: **27.04.2016**
(21) Application number: 14189571.4
(22) Date of filing: 20.10.2014
(51) Int. Cl.: F16H 61/00, F16H 57/04

(54) **Transmission with jet pump**

(71) Applicant: Transmisiones y Equipos Mecánicos, S.A. de C.V., Queretaro, 76120 (MX)
(72) Inventor: De Landtsheere, Jannick, 8310 Assebroek (BE)
(74) Representative: Prinz & Partner mbB

(57) **Abstract**

The invention relates to a vehicle transmission having a hydraulic circuit which provides a fluid flow for cooling and/or lubricating at least one component within the transmission, with a jet pump being provided for converting a feed flow with high pressure and low volume into an outlet flow with low pressure and high volume, characterized in that a proportional pressure reducing valve being provided for controlling the jet pump feed flow.

## Description

The invention relates to a vehicle transmission having a hydraulic circuit which provides a fluid flow for cooling and/or lubricating at least one component within the transmission, with a jet pump being provided for converting a feed flow with high pressure and low volume into an outlet flow with low pressure and high volume.

The majority of automated vehicle transmissions, such as dual clutch transmissions, stepped automatic transmissions or automated mechanical transmissions, rely on hydraulics for their operation. The function of the hydraulic circuit consists of two main elements: first, the hydraulic circuit is to provide an oil flow at a certain pressure, to enable the control of the different actuators in the transmission (e.g. clutches, synchronizers, ...). Second, the hydraulic circuit is to provide oil flow to cool and lubricate the different components in the transmission (e.g. gears, wet clutches, ...).

While the actuation function typically requires moderate to high pressure, the needed flow is quite low. For the cooling and lubrication function it's the other way round: a larger oil flow is required, but not much pressure.

To avoid that the lubrication and cooling flow requirement necessitates the use of a large oil pump, with its associated energy losses, it is known to install one or more jet pump(s) to boost the flow from a low flow, high pressure path into a high flow, low pressure path.

The object of the invention is to provide a favorable means of controlling the outlet flow of such a jet pump.

In order to solve this object, the invention provides a vehicle transmission of the type mentioned above, which is provided with a proportional pressure reducing valve for controlling the jet pump feed flow. While most known applications of jet pumps in vehicle transmissions use a flow control valve to supply oil to the jet pump nozzle, often requiring a specific valve design for this function, it is found that a proportional pressure reducing valve offers excellent controllability of the jet pump outlet flow, while enabling the re-use of a valve type usually already present in the transmission for actuation control purposes. Further, using a properly controlled jet pump allows boosting clutch cooling flow without increasing the size of the primary, engine driven pump. Experiments have shown that a proportional pressure reducing valve offers very good controllability and linearity to control the outlet flow of the jet pump. Such a PPRV can be the same valve as used for clutch pressure control or other functions in the transmission, so that there is no new and separate valve required to control the jet pump.

According to a preferred embodiment, the proportional pressure reducing valve is a directly acting proportional pressure reducing valve. This ensures a very precise control of the outlet flow depending from the current supplied to the valve.

Preferably, a filter is provided at a suction inlet of the jet pump. This avoids clogging of the jet pump by particles potentially present in the hydraulic oil used in the transmission.

According to a preferred embodiment, a check valve is provided at the suction inlet of jet pump, in order to prevent back flow through the inlet.

According to a preferred embodiment, a shut-off valve is provided upstream of the proportional pressure reducing valve. A shut-off valve allows interrupting any flow to the jet pump in case the hydraulic fluid is currently needed for other purposes, or if there is a malfunction of the jet pump.

Preferably, a pressure relief valve is used as shut-off valve. A pressure relief valve is a cost effective component for efficiently implementing the desired shut-off functionality.

According to a preferred embodiment, a bypass path is associated with the shut-off valve. This ensures a minimum of a cooling and lubrication effect in case the shut-off valve shuts down the fluid supply to the inlet opening of the jet pump.

According to a preferred embodiment, at least a second proportional pressure reducing valve is being used within the transmission, the second valve being used for switching the state of components of the transmission and being of the same type as the valve associated with the jet pump. In other words, the proportional pressure reducing valve used for controlling the jet pump is of the same type as other proportional pressure reducing valve(s) used within the transmission, e.g. for controlling fluid flow to a clutch, so that the number of different parts to be kept available is reduced, reducing overall costs.

A feature of the proportional pressure control valve is that it has an outlet pressure dependent force acting internally in the valve on the valve member, thereby providing the desired control characteristic.

Preferred embodiments are described in the dependent claims.

The invention is now described with reference to an embodiment which is shown in the drawings. In the drawings,
Figure 1 schematically shows a transmission according to the invention;
Figure 2 schematically shows a jet pump;
Figure 3 shows a jet pump flow vs. the outlet pressure at a constant nozzle pressure;
Figure 4 shows the jet pump flow and pressure vs. nozzle flow;
Figure 5 schematically shows a jet pump with a PPRV;
Figure 6 schematically shows a static PPRV characteristic;
Figure 7 shows the combined characteristic of a PPRV and a jet pump; and
Figure 8 schematically shows a jet pump with PPRV integrated into the hydraulic circuit of a transmission.

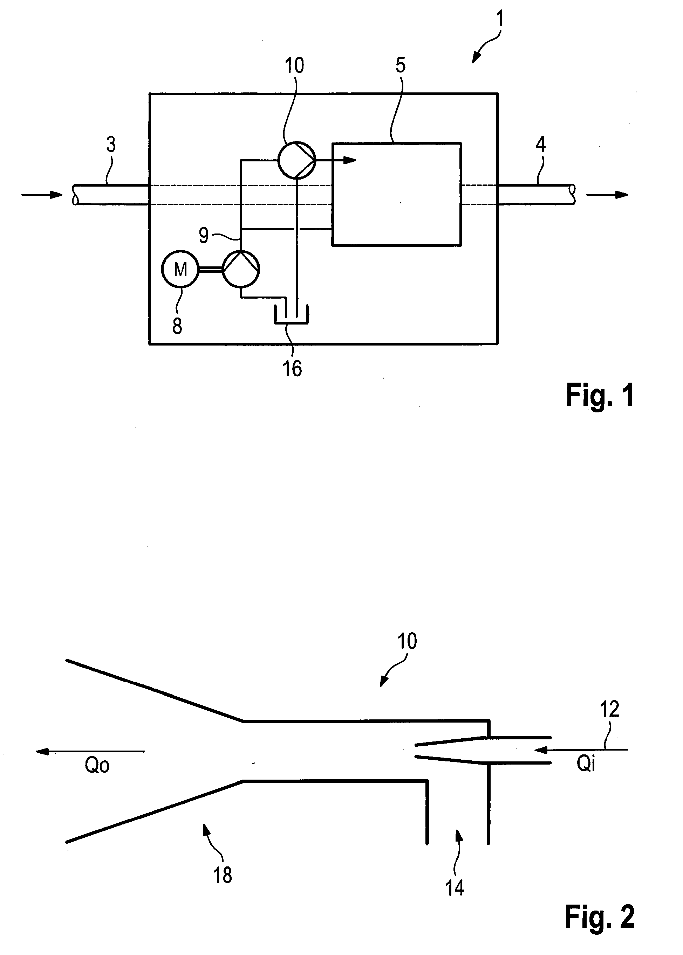

Figure 1 schematically shows a vehicle transmission 1 with a housing 2 into which an input shaft 3 extends and from which an output shaft 4 extends.

In the interior of housing 2, some components 5 are arranged which are involved in transmitting a torque from input shaft 3 to output shaft 4.

A pump 7 provides a fluid flow. Usually, pump 7 feeds the hydraulic fluid into a pressure circuit 9 which provides the switching fluid flow.

Components 5 can be a clutch, in particular a double clutch, sets of planetary gears, synchronizers, etc. The particular type and construction of component 5 is of no importance. It is only important that operation of component 5 requires two different fluid flows, namely a switching fluid flow (indicated in Figure 1 with thin lines from the hydraulic system to the respective components) and a cooling/lubricating fluid flow (hereinafter referred to, for the sake of convenience, as "cooling fluid flow" and indicated in Figure 1 with a thick line extending from the hydraulic system to the respective component).

The fluid used in the field of vehicle transmissions usually is hydraulic oil.

The switching fluid flow is characterized by having a comparatively low flow rate but high pressure. For the cooling fluid flow, the characteristic is quite the opposite: the flow rate is high while the pressure is low.

Typical values for the switching fluid flow are a pressure of 15 to 30 bar and a flow rate of 5 to 10 l/min.

Typical values for the cooling fluid flow are a pressure of 1 to 5 bar and a flow rate of 15 to 30 l/min.

The cooling fluid flow is obtained by deriving a portion of the switching fluid flow and feeding it to a jet pump, in particular into an inlet opening 12 of jet pump 10 (see also Figure 2) as inlet flow Qi. Jet pump 10 has a suction opening 14 associated with a reservoir 16 for the hydraulic fluid.

Supplying hydraulic fluid to inlet opening 12 of jet pump 10 results in hydraulic fluid from reservoir 16 being sucked into jet pump 10 and leaving the jet pump via a diffusor 18 as outlet flow Qo.

This is explained in the following in more detail with reference to Figure 2. Oil flow Qi at high pressure is provided to inlet opening 12 and mixes in the throat with oil sucked in from the suction opening 14. Outlet pressure is typically increased by a diffusor 18. Outlet flow Qo equals nozzle flow Qi plus suction flow. With a good design of the jet pump 10 and when the outlet pressure is low enough, the outlet flow Qo can be more than twice as high as the inlet flow Qi.

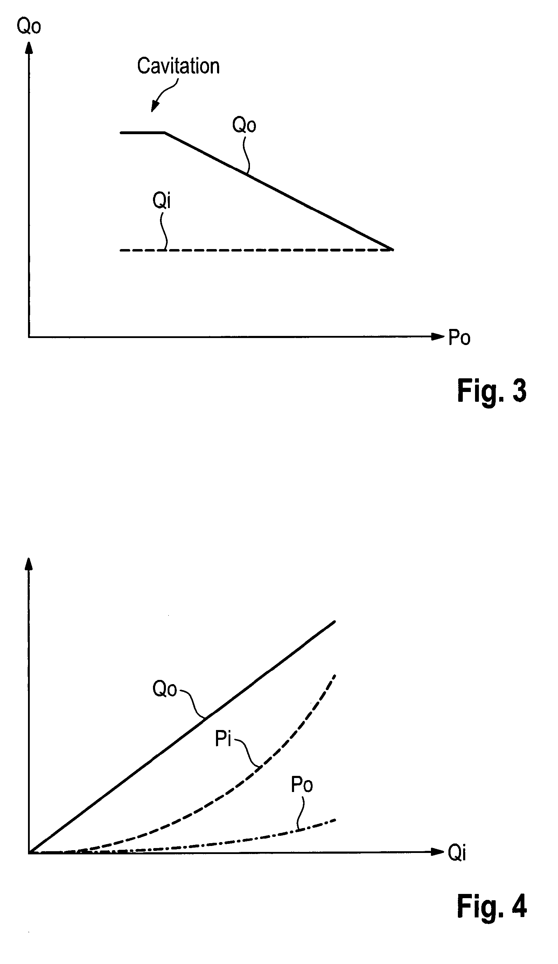

A simplified characteristic is shown in Figure 3. For a constant inflow pressure Pi (and thus constant inflow rate Qi), the outlet flow Qo is increasing with reducing outlet pressure Po. The limit here is cavitation.

Figure 4 shows the jet pump characteristic for a varying inflow rate Qi. Because inlet flow rate Qi vs. inlet pressure Pi and outlet flow rate Qo vs. outlet pressure Po both typically vary quadratically (for turbulent flow range), the outlet flow rate Qo is proportional to the inlet flow rate Qi with a constant gain factor.

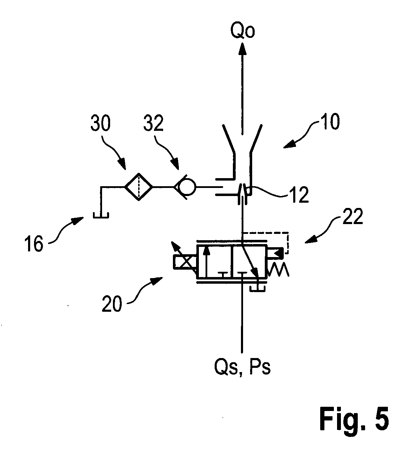

For controlling the flow through jet pump 10, a proportional pressure reducing valve 20 is provided for controlling the inlet flow Qi to inlet opening 12. This principal layout is shown in Figure 5.

The inlet opening 12 (the nozzle) of the jet pump 10 is controlled by proportional pressure reducing valve 20 (hereinafter referred to as PPRV). This is a valve that receives a supply oil flow Qs at a supply pressure Ps controlled by the hydraulic system in the transmission, and regulates its outlet pressure (in this case the jet pump nozzle pressure) proportionally to the current applied to the solenoid of the valve. This is achieved by a pressure feedback path 22 inside the valve, so that outlet pressure is making equilibrium with the solenoid force minus the spring force and minus dynamic oil flow forces acting in the valve.

In Figure 5 is shown an optional filter 30 at the suction flow inlet of the jet pump 10 to prevent dirt particles entering the flow path. Care should be taken that this filter 30 does not cause too much pressure drop to avoid cavitation becoming a problem for the jet pump operation. Usually, the components downstream receiving the outlet flow from the jet pump are not too critical in their contamination sensitivity, allowing a rather coarse suction filter.

A further optional element is a check valve 32 in the suction flow inlet of the jet pump, to prevent back flow through the inlet. Also here, care should be taken to avoid significant pressure drop and subsequent cavitation problems.

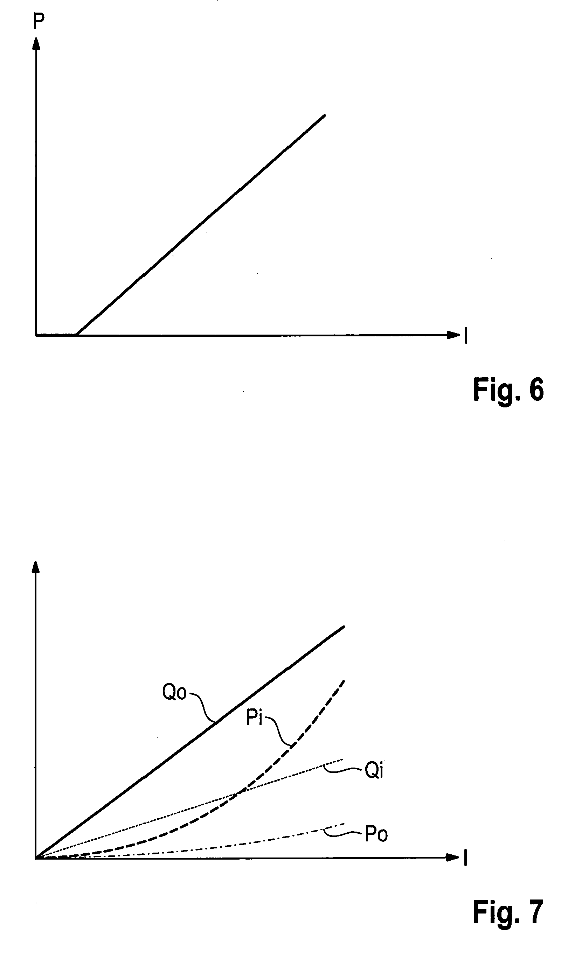

The pressure P as function of the current I supplied to the PPRV 20 with a closed output path ("static" condition) is shown in Figure 6.

As an alternative to using a direct acting type PPRV, a pilot solenoid valve in combination with a main spool type PPRV could be used to achieve the same functionality.

When combining jet pump 10 and PPRV 20, the effect of the flow through the PPRV 20 makes the relation of PPRV outlet flow (=nozzle flow Qi) vs. solenoid current I more or less linear: the linearity depends on the geometric parameters of the PPRV, but is very good for typical PPRV designs used for actuation purposes in vehicle transmissions. This in turn has the benefit of making the overall characteristic of jet pump outlet flow Qo vs current I a linear relation, as shown in Figure 7, allowing a broad control current range and easy controllability.

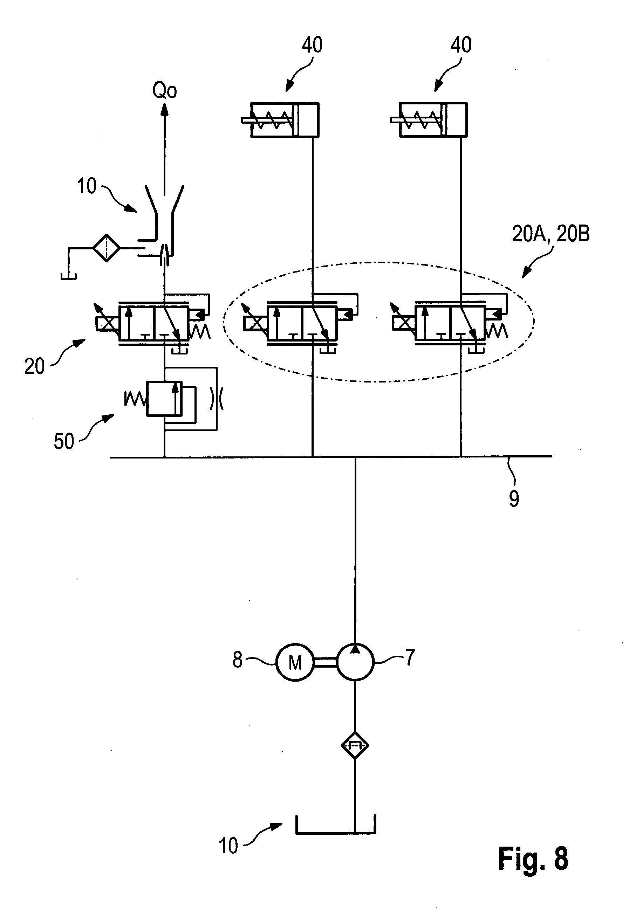

One of many possible ways of integrating this jet pump + PPRV combination into the hydraulic system of an automated transmission is shown in Figure 8. Because the nozzle flow range of the jet pump is typically in the same range as the flow requirement for the actuation elements 40 in the transmission, it is possible to use exactly the same type of valves 20A, 20B to control the actuation as well as cooling and lubrication of the transmission elements. This reduces the amount of part numbers in the transmission and increases the production number of the PPRV, thus reducing the overall cost. Also from responsiveness, linearity and hysteresis point of view, the actuation type PPRV's are usually very good, ensuring optimum control of the cooling and lubrication flow in all circumstances, without specific development effort.

Figure 8 also shows a method of prioritizing the actuation control in the transmission hydraulic system over the cooling and lubrication function. In a situation where the oil supply for the cooling PPRV('s) and the actuation PPRV('s) is taken from the same feed, a drop in the common supply pressure could cause actuation control problems. Such a drop could for example happen when a fault is present in the jet pump PPRV (electrical short cut, mechanical sticking, ...). As a lot of flow would go through the jet pump nozzle path in such fault condition, the supply pressure could drop when the primary oil pump is not able to supply enough oil (e.g. at low engine speed). To prevent loss of control over the actuation elements due to lack of supply pressure, a simple valve 50 can be added in the supply path of the jet pump PPRV, so that it effectively closes this flow path when the supply pressure is not high enough, allowing minimum transmission functionality also in this fault condition. In normal operating conditions, this valve would be fully open, and its presence would have nearly no effect on the jet pump + PPRV functionality. A straightforward pressure relief valve would be sufficient for this function. A bypass oil path could ensure minimum cooling and lubrication in the above described fault conditions.

## Claims

1. A vehicle transmission having a hydraulic circuit which provides a fluid flow for cooling and/or lubricating at least one component within the transmission, with a jet pump being provided for converting a feed flow with high pressure and low volume into an outlet flow with low pressure and high volume, **characterized in that** a proportional pressure reducing valve is being provided for controlling the jet pump feed flow.

2. The vehicle transmission of claim 1 wherein the proportional pressure reducing valve is a directly acting proportional pressure reducing valve.

3. The vehicle transmission of claim 1 or claim 2 wherein a filter is provided at a suction inlet of the jet pump.

4. The vehicle transmission of any of the preceding claims wherein a check valve is provided at the suction inlet of jet pump.

5. The vehicle transmission of any of the preceding claims wherein a shut-off valve is provided upstream of the proportional pressure reducing valve.

6. The vehicle transmission of claim 5 wherein a pressure relief valve is used as shut-off valve.

7. The vehicle transmission of claim 5 or claim 6 wherein a bypass path is associated with the shut-off valve.

8. The vehicle transmission of any of the preceding claims wherein at least a second proportional pressure reducing valve is being used within the transmission, the second valve being used for switching the state of components of the transmission and being of the same type as the valve associated with the jet pump.

9. The vehicle transmission of any of the preceding claims wherein the proportional pressure control valve has an outlet pressure dependent force acting internally in the valve.
